# EUROPEAN PATENT SPECIFICATION

(11) **EP 2 104 013 B1**
(45) Date of publication and mention of the grant of the patent: **07.05.2014**
(21) Application number: 09152005.6
(22) Date of filing: 04.02.2009
(51) Int. Cl.: G05B 19/4067

(54) **Numerical controller with machining restart function**
Numerisches Steuergerät mit Bearbeitungsneustartfunktion
Contrôleur numérique avec fonction de reprise d'usinage

(30) Priority: 17.03.2008 JP 2008067314
(43) Date of publication of application: 23.09.2009
(73) Proprietor: FANUC CORPORATION, Oshino-mura Minamitsuru-gun Yamanashi 401-0597 (JP)
(72) Inventor: Hosokawa, Masahiko, Minamitsuru-gun Yamanashi 401-0597 (JP); Haga, Makoto, Minamitsuru-gun Yamanashi 401-0597 (JP)
(74) Representative: Ward, James Norman

(56) References cited:
- EP-A1- 0 540 888
- EP-A1- 1 672 451
- US-A- 4 638 227

## Description

### BACKGROUND OF THE INVENTION

### 1. Field of the Invention

The present invention relates to a numerical controller for controlling a machine tool and the like, and more particularly to a numerical controller provided with a function of restarting suspended machining.

### 2. Description of Related Art

A numerical controller for controlling a machine tool performs a numerical control process in accordance with a machining program, and controls the machine tool in accordance with the processing result, to machine a workpiece as instructed.

Conventionally, when machining is suspended while a workpiece is machined by means of the numerical controller, information about the suspended point is acquired, as program restart block data, from the current status of the numerical control. The program restart block data includes a sequence number indicating the suspended point in the program (the number embedded in the program and succeeding the symbol "N"), a program counter (information indicating the number of blocks executed after the start of the operation), a program name or number, a main program name or number, information indicating a point in the main program where the subprogram is called, information about functions executed in the suspended block, position data, and information about macro variables.

There has been known a conventional technique in which, when an suspended program is to be restarted, the program restart block data is used without carrying out provisional execution of the program up to the restart point (provisional execution: only the computation according to the program is executed without operating the machine). Specifically, instead of carrying out the provisional execution, the program is searched for the sequence number corresponding to the restart point or the blocks of the program are counted to find the program restart block so that the target restart point in the program can be quickly reached for restart of the program (this technique is hereinafter referred to as the "jump search").

A technique has also been known in which the provisional execution of the program up to the restart block is performed to restore modal information (or functional information) and the status of miscellaneous functions for restart of the program (this technique will be hereinafter referred to as the "provisional execution/search"; cf. JP06-202723A and JP2002-373008A).

In the case of restarting the program by the jump search, the program is not executed up to the machining suspended point, and therefore, specific functions, if instructed before the machining suspended point, cannot be restored. For example, where the machining suspended point reached by the jump search corresponds to a block which is executed in tool radius compensation mode, the machining is restarted from the machining suspended point without the compensation vector calculation for the tool radius compensation being performed, giving rise to a problem that the machining is carried out along a tool path different from the one followed during normal operation.

Where the provisional execution/search is executed from the beginning of the program to restore the functional information and information about vector calculations, the machining can be restarted properly. In this case, however, a problem occurs in that time is required to perform the provisional execution/search up to the machining restart block.

Further, in the conventional devices, the machining restart block and program blocks preceding and succeeding the restart block, as well as character information such as program sequence numbers and block counters, are not displayed on the same screen. It is therefore difficult for the machine operator to confirm the status of the machining restart block of the program.

EP 1672451 discloses a numerical controller intended to accurately restore a state in a resumption point, the controller being capable of auto-generating a state restoring program for restoring to the resumption point without executing a machining program.

EP 0540888 discloses a laser cutting apparatus intended to allow cutting to be automatically restarted or redone without intervention from an operator once a cutting error or fault occurs.

### SUMMARY OF THE INVENTION

The present invention provides a numerical controller having a machining restart function and allowing an operator to easily confirm status of a program restart block so that a machining operation is performed along the same tool path as in the normal operation after the machining is restarted.

A numerical controller of the present invention is defined in claim 1, to which reference should now be made.

The numerical controller may further comprise first display means that displays at least a part of the acquired and saved program restart block data in order of execution as a list on a display screen.

The numerical controller may further comprise selection means for allowing an operator to select a piece of the program restart block data from the list displayed on the display screen, and restart execution means for restarting the suspended machining using the selected piece of the program restart block data.

The numerical controller may further comprise second display means that displays a restart block of the machining program for restarting the suspended machining and blocks preceding and succeeding the restart block, based on information of the program pointer included in the selected piece of the program restart block data.

The numerical controller may further comprise restart point designation means that allows an operator to designate a desired block as the restart block using a cursor movable on the blocks of the machining program displayed by the second display means, so that the machining program is restarted from the selected block.

According to the present invention, a numerical controller having a machining restart function is provided which permits an operator to easily confirm the status of the program restart block and which also enables the machining operation to follow the same tool path as in the normal operation after the machining is restarted.

### BRIEF DESCRIPTION OF THE DRAWINGS

FIG. 1 is a block diagram illustrating a program analysis process and program restart block data acquisition process performed by a numerical controller with a machining restart function according to the present invention;
FIG. 2 illustrates an exemplary machining program executed by the numerical controller;
FIG. 3 exemplifies data items stored at respective addresses of a memory provided in the numerical controller;
FIG. 4 illustrates the manner of how part of program restart block data is displayed in list form according to the present invention;
FIG. 5 illustrates the manner of how details of selected program restart block data are displayed on screen according to the present invention;
FIG. 6 is a flowchart illustrating an algorithm for the process of acquiring and saving the program restart block data for restarting machining according to the present invention;
FIG. 7 is a flowchart illustrating an algorithm for the process of displaying the program restart block data and restarting machining according to the present invention;
FIG. 8 is a flowchart illustrating an algorithm for the process of resetting a restart point according to the present invention;
FIG. 9 is a flowchart illustrating an algorithm for the process of restarting the program according to the present invention;
FIG. 10 is a flowchart illustrating an algorithm for the process of editing the program restart block data according to the present invention; and

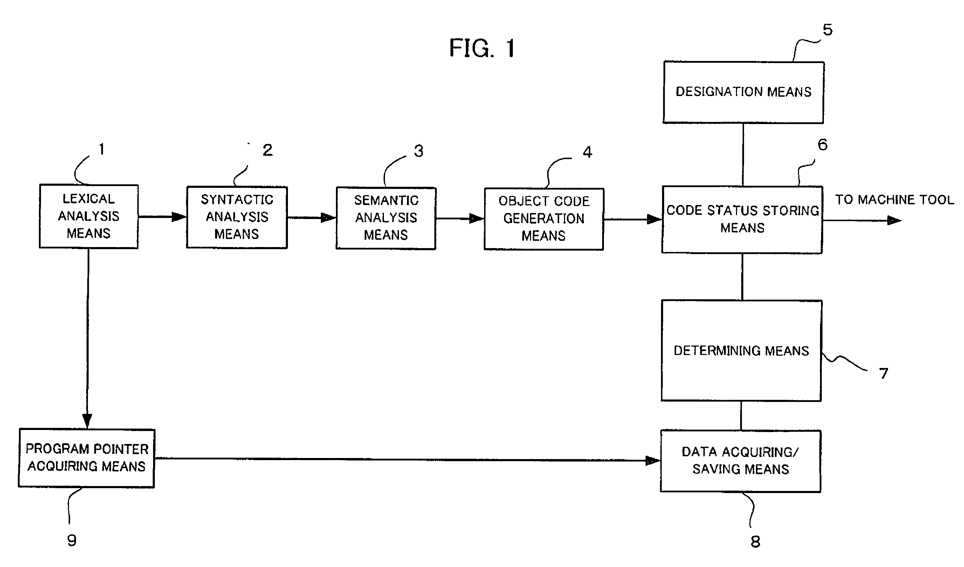

FIG. 1 is a block diagram illustrating a principal part of a computerized numerical controller (CNC) with the machining restart function according to an embodiment of the present invention.

### DETAILED DESCRIPTION

FIG. 1 is a block diagram illustrating a program analysis process and program restart block data acquisition process performed by a numerical controller with a machining restart function according to the present invention. Functions of the individual blocks will be explained below.

Lexical analysis means 1 analyzes a machining program to distinguish alphabetic symbols from numeric symbols. Syntactic analysis means 2 determines what an instructed combination of alphabetic and numeric symbols represents. Semantic analysis means 3 identifies the function specified by the instructed alphabetic and numeric symbols, creates information on function groups, and performs processes according to function groups or functions. Object code generation means 4 generates an object code in accordance with the result of the semantic analysis. The functional blocks from the lexical analysis means 1 to the object code generation means 4 are technical means conventionally known in the art as functions of the machining program analysis process performed by numerical controllers.

Designation means 5 is means for setting, in advance, codes of which the status is to be stored, among codes that govern the operation of the numerical controller. Code status storing means 6 stores the status of codes that are designated in advance by the designation means 5, from among the object codes generated by the object code generation means 4.

Determining means 7 determines, on the basis of the information on the function groups, a function changeover block where the function changes from one status to another, and also determines whether or not an operation stop signal has been input. If, as a result of the determination by the determination means 7, a function changeover block or the input of an operation stop signal is detected, data acquiring/saving means 8 acquires program restart block data and stores the acquired data in its memory.

Program pointer acquiring means 9 acquires a program pointer indicating the location in the memory where the program block under analysis is stored. The program pointer acquired by the program pointer acquiring means 9 is stored, together with the program restart block data, in the memory of the data acquiring/saving means 8.

In the figure, the arrow directed from the code status storage means and labeled "TO MACHINE TOOL" indicates that commands obtained as a result of the analysis by the machining program analysis process are supplied to actuating means of a machine tool.

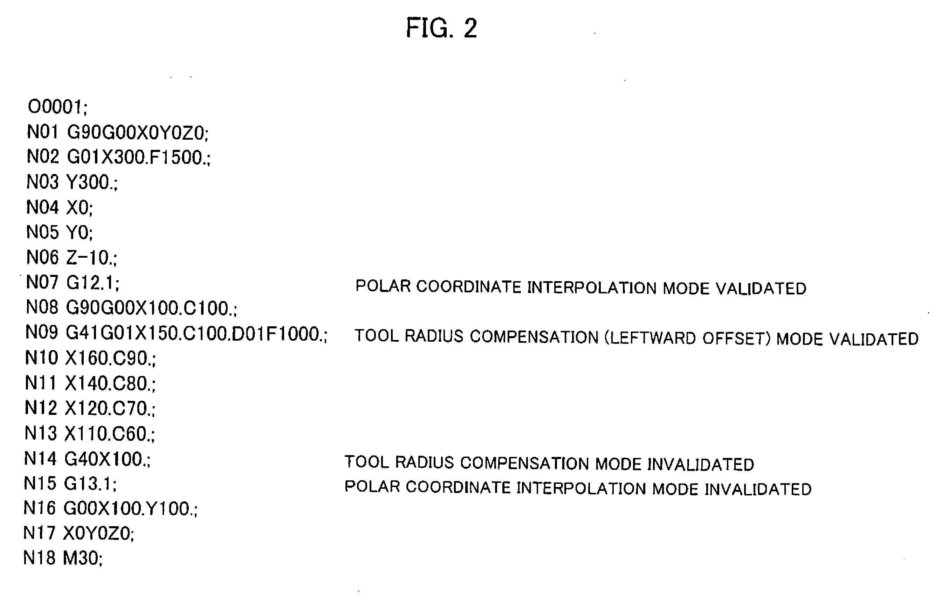

FIG. 2 shows an example of a machining program executed by the numerical controller to control the machine tool. Referring to the exemplary machining program (O0001), the operation of the numerical controller with the machining restart function according to the present invention will be described. Each machining program is distinguished by the symbol "O" plus a number. The machining program is composed of a number of blocks. Each block includes a sequence number (N code), a preparatory function (G code), position information (coordinate words) such as X, Y and Z, a feed rate (F code), a miscellaneous function (M code), etc.

The following explains in detail the machining program (00001) shown in FIG. 2.
Sequence No. N01: "G90" is an absolute command, and "G00" is a rapid traverse command for positioning. The machine is rapidly returned to the coordinates "X0, Y0, Z0".
Sequence No. N02: "G01" is a linear interpolation command. The machine is moved at a feed rate of "1500" to the coordinate "X300" by means of linear interpolation.
Sequence No. N03: The machine is moved at the feed rate "1500" to the coordinate "Y300" by means of linear interpolation.
Sequence No. N04: The machine is moved at the feed rate "1500" to the coordinate "X0" by means of linear interpolation.
Sequence No. N05: The machine is moved at the feed rate "1500" to the coordinate "Y0" by means of linear interpolation.
Sequence No. N06: The machine is moved at the feed rate "1500" to the coordinate "Z-10" by means of linear interpolation.
Sequence No. N07: Polar coordinate interpolation mode is made valid by the code "G12.1".
Sequence No. N08: The machine is rapidly moved for positioning at the coordinates "X100, C100" by the absolute command.
Sequence No. N09: Tool radius compensation (leftward offset) mode is made valid.
Sequence No. N10: The machine is operated up to the coordinates "X160, C90" in the polar coordinate interpolation mode plus the tool radius compensation mode.
Sequence No. N11: The machine is operated up to the coordinates "X140, C80" in the polar coordinate interpolation mode plus the tool radius compensation mode.
Sequence No. N12: The machine is operated up to the coordinates "X120, C70" in the polar coordinate interpolation mode plus the tool radius compensation mode.
Sequence No. N13: The machine is operated up to the coordinates "X110, C60" in the polar coordinate interpolation mode plus the tool radius compensation mode.
Sequence No. N14: The tool radius compensation mode is made invalid by the code "G40", and then the machine is moved to the coordinate "X100" by means of polar coordinate interpolation.
Sequence No. N15: The polar coordinate interpolation mode is made invalid by the code "G 13.1".
Sequence No. N16: The machine is rapidly moved by means of linear-interpolation for positioning at the coordinates "X100, Y100".
Sequence No. N17: The machine is returned to the origin, namely, the coordinates "X0, Y0, Z0".
Sequence No. N18: The machining program is ended.

During normal operation in accordance with the machining program "00001" shown in FIG. 2, the commands at the sequence numbers "N07", "N09", "N14" and "N15" each act as a function changeover command. In these instances, the codes governing the operation of the numerical controller are "G12.1" at the sequence number "N07", "G41" at the sequence number "N09", "G40" at the sequence number "N14", and "G13.1" at the sequence number "N15". These codes are designated in advance by the designation means as codes whose status is to be acquired and saved.

In the machining program analysis process performed by the numerical controller, the code which is executed in, for example, the block "N09" and which governs the operation of the numerical controller, namely, "G41", is detected, and the operational status of the numerical controller is acquired as internal information related to the tool radius compensation function. The internal information of the numerical controller is grouped according to functional similarity. In the exemplary program, the command "G40" (invalidation of the tool radius compensation mode) executed in the block "N14" and the command "G41" belong to the same group relating to the tool radius compensation function and are acquired as function group information indicating variables of the group.

The function group information includes information about invalidity of the function (function invalidity status). In the exemplary machining program, when the command "G40" is executed, the tool radius compensation function is invalidated and the command "G40" is acquired as the function group information associated with this function, thus making it possible to detect the function invalidity status. Also, the function group information includes information about changeover of the status of the function in the function group. In the exemplary program, at the changeover of the command from "G41" to "G40", a changeover of the status of the function in the function group takes place and is acquired as the function group information.

The program is read block by block, and after one block is analyzed, the function group information is created. By checking all entries of the function group information created in this manner, it is possible to determine whether a certain function is validated or not, whether or not a changeover of function has occurred in a certain function group, and whether or not the status of the function in a certain function group has changed from "valid" to "invalid". Thus, when machining operation is performed in accordance with the program, the function changeover blocks can be identified and information about such blocks can be successively acquired and saved as the program restart block data to be used when the program is restarted.

In the exemplary program "00001", the blocks "N07", "N09", "N14" and "N 15" each include a function changeover command, and therefore, the program restart block data is acquired as these blocks are executed.

In addition to the program restart block data, information about a machining suspended block where the machining is suspended is acquired and saved as restart block data. The term "suspended" represents the situation where the machining operation is suspended by the operator (the machining is stopped by a stop signal) and the situation where the machining is stopped because of an alarm generated by the numerical controller.

To allow the program restart block data to be located in the program, the program pointer, which is a physical address indicating the location in the memory where the program block is stored, is saved (cf. program pointer acquiring means 9 in FIG. 1) together with the sequence number and block counter information. Where the program pointer is used, a specific block in the program can be directly accessed. It is therefore possible to move to a specified location in the program faster than in the case of the jump search in which the program is sequentially searched from the beginning to find a target location by using the sequence number or the block counter.

When the program restart block data corresponding to the machining suspended point is designated, the function group information associated with the designated data is checked against the program pointer information and the restart block data about the function changeover blocks and the machining suspended block. If it is judged that the function group is already "ON", a warning message is displayed to the effect that the program cannot be perfectly restarted with the designated program restart block data, thereby giving a warning to the operator.

Instead of using the program restart block data corresponding to the machining suspended point, the preceding program restart block data may be searched to find program restart block data corresponding to a function changeover block, and the program restart block data thus found may be used in place of the program restart block data corresponding to the machining suspended point. Then, using the program pointer saved in this program restart block data, the corresponding block of the program is directly read out and the current numerical control status is updated with the information included in the program restart block data. The program restart block data is saved in a fixed region in association with the individual function groups.

The program restart block data includes information shown in Table 1 below. In Table 1, the item 1 "Acquired/saved date and time", the item 2 "Total program counter" and the item 3 "Function group number" are management information. By checking the item 1 "Acquired/saved date and time" and the item 2 "Total program counter", it is possible to determine which of the program restart block data is a later one. The items 4 through 14 are detailed information of the program restart block data.

The numbers assigned to the respective types of information are given for the sake of explanation only and do not bear any particular significance.

**Table 1**

| | Types of information included in restart block data |
|---|---|
| 1 | Acquired/saved date and time |
| 2 | Total program counter (Information indicating the number of blocks between the start of machining and the program block to be acquired and saved) |
| 3 | Function group number |
| 4 | Relative program counter (Program counter associated with each program. Where a subprogram is called, for example, the relative program counter shows information about the number of blocks between the beginning of the called program and the program block to be acquired and saved) |
| 5 | Sequence number information indicating the location of the program block to be acquired and saved (The number succeeding the symbol "N" in the program block) |
| 6 | Program pointer indicating the location in the memory where the program block to be acquired and saved is registered |
| 7 | Program name (Program number where the program is identified by a number) |
| 8 | Name of the immediate parent program (Program number where the parent program is identified by a number) |
| 9 | Information about the location of the statement in the immediate parent program where the program being executed is called |
| 10 | Information indicating the number of subprograms existing between the true parent program and the currently called subprogram (Nesting information) |
| 11 | Function group information |
| 12 | Function group information (Multiple items of function group information are acquired) |
| 13 | Information on position data |
| 14 | Information on macro variables |

Tables 2 through 7 below illustrate the manner of how multiple items of program restart block data are saved in respective fixed regions according to function groups. Each of Tables 2 to 7 is a visual representation of the data saved in the individual fixed regions. With the saving format shown in Tables 2 to 7, up to eight items of program restart block data can be saved per function group.

If the number of the items of program restart block data exceeds "8" in the process of acquiring and saving the program restart block data, the oldest program restart block data is identified from the management infonnation and the new program restart block data is written over the oldest one.
Alternatively, the program restart block data may be saved in a ring buffer prepared for each function group. Where such ring buffers are used, the new program restart block data is written over the first one.

**Table 2**

| Function group 01 |
|---|
| Function 01 restart block data 1 |
| Function 01 restart block data 2 |
| Function 01 restart block data 3 |
| ... |
| Function 01 restart block data 8 |

**Table 3**

| Function group 02 |
|---|
| Function 02 restart block data 1 |
| Function 02 restart block data 2 |
| Function 02 restart block data 3 |
| ... |
| Function 02 restart block data 8 |

**Table 4**

| |
|---|
| Function group 03 |
| Function 03 restart block data 1 |
| Function 03 restart block data 2 |
| Function 03 restart block data 3 |
| ... |
| Function 03 restart block data 8 |

**Table 5**

| Function group 04 |
|---|
| Function 04 restart block data 1 |
| Function 04 restart block data 2 |
| Function 04 restart block data 3 |
| ... |
| Function 04 restart block data 8 |

**Table 6**

| Function group 05 |
|---|
| Function 05 restart block data 1 |
| Function 05 restart block data 2 |
| Function 05 restart block data 3 |
| ... |
| Function 05 restart block data 8 |

**Table 7**

| Function group 06 |
|---|
| Function 06 restart block data 1 |
| Function 06 restart block data 2 |
| Function 06 restart block data 3 |
| ... |
| Function 06 restart block data 8 |

As shown in Tables 8 and 9 below, the program restart block data may be divided into "management information" (cf. Table 8) and "detailed information" (cf. Table 9), and the management information alone may be saved in the fixed region associated with each function group or be saved in a ring buffer.

**Table 8**

| | Management information of program restart block data |
|---|---|
| 1 | Acquired/saved date and time |
| 2 | Total program counter (Information indicating the number of blocks between the start of machining and the program block to be acquired and saved) |
| 3 | Function group number |
| P | Pointer indicating the location in the memory where the detailed information of the acquired program restart block data is saved |

**Table 9**

| | Detailed information of program restart block data |
|---|---|
| 4 | Relative program counter (Program counter associated with each program. Where a subprogram is called, for example, the relative program counter shows information about the number of blocks between the beginning of the called program and the program block to be acquired and saved) |
| 5 | Sequence number information indicating the location of the program block to be acquired and saved (The number succeeding the symbol "N" in the program block) |
| 6 | Program pointer indicating the location in the memory where the |
| | program block to be acquired and saved is registered |
| 7 | Program name (Program number where the program is identified by a number) |
| 8 | Name of the immediate parent program (Program number where the parent program is identified by a number) |
| 9 | Information about the location of the statement in the immediate parent program where the program being executed is called |
| 10 | Information indicating the number of subprograms existing between the true parent program and the currently called subprogram (Nesting information) |
| 11 | Function group information |
| 12 | Function group information (Multiple items of function group information are acquired) |
| 13 | Information on position data |
| 14 | Information on macro variables |

Tables 10 through 14 below illustrate formats wherein only the management information set apart as stated above is saved in a ring buffer. The management information (cf. Table 10) is successively written in order of acquisition into the ring buffer, and if up to 100 items of management information have been saved, newly acquired management information is written over the first-acquired one. In this case, the detailed information may be brought together according to function groups, as shown in Tables 11 to 14, or may be saved in respective fixed regions of the memory in the same order as the acquired management information such that the detailed information corresponding to the first item of management information is saved in the first fixed region.

**Table 10**

| | Management information |
|---|---|
| 1 | Function 01 restart block data 1 |
| 2 | Function 03 restart block data 1 |
| 3 | Function 04 restart block data 1 |
| 4 | Function 01 restart block data 2 |
| 5 | Function 04 restart block data 2 |
| 6 | Function 03 restart block data 2 |
| 7 | Function 03 restart block data 3 |
| 8 | Function 05 restart block data 1 |
| 9 | Function 04 restart block data 3 |
| 10 | Function 05 restart block data 2 |
| ... | ... |
| 100 | Function 01 restart block data 3 |

**Table 11**

| Function group 01 Detailed information |
|---|
| Function 01 restart block data 1 |
| Function 01 restart block data 2 |
| ... |
| Function 01 restart block data 8 |

**Table 12**

| Function group 02 Detailed information |
|---|
| Function 02 restart block data 1 |
| Function 02 restart block data 2 |
| ... |
| Function 02 restart block data 8 |

**Table 13**

| Function group 02 Detailed information |
|---|
| Function 01 restart block data 1 |
| Function 01 restart block data 2 |
| ... |
| Function 01 restart block data 8 |

**Table 14**

| Function group 03 Detailed information |
|---|
| Function 02 restart block data 1 |
| Function 02 restart block data 2 |
| ... |
| Function 02 restart block data 8 |

The machining restart function according to the present invention will be now described with reference to, by way of example, the item number 6 information, namely, the program pointer, included in the detailed information (cf. Table 1 or 9) of the program restart block data.

Once the program is stored in memory, the program is managed by pointer information indicating a specific location in the memory (the pointer information will be hereinafter referred to as the "program pointer"). In accordance with exemplary program management, the program pointer points to a certain location in terms of the number of bytes counted from the starting location of the memory storing the program.

The program pointer is acquired as part of the program restart block data. When the program is to be displayed, the block specified by the program pointer as well as several blocks preceding and succeeding the program pointer are read and displayed, whereby a desired program can be displayed in a moment.

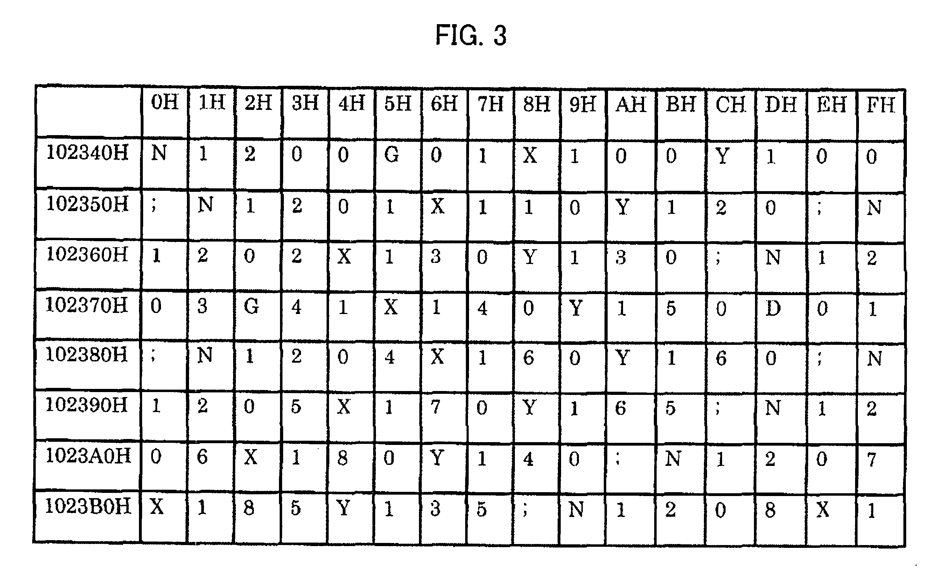

FIG. 3 exemplifies data items stored at respective addresses of the memory provided in the numerical controller. In FIG. 3, the data items stored in the memory are represented by characters for ease of understanding. Also, the stored data is segmented every 16 characters so that the addresses may be easy to understand. Usually, an alphabetic character or a numeral is equivalent to one byte of information. Thus, the data "1", for example, is expressed as "31" for registration in the memory.

Assuming that the data is registered in the memory as shown in FIG. 3, if the program pointer saved in the program restart block data shows "10236DH", for example, then the block "N1203G41X140Y150D01;" is the restart block.

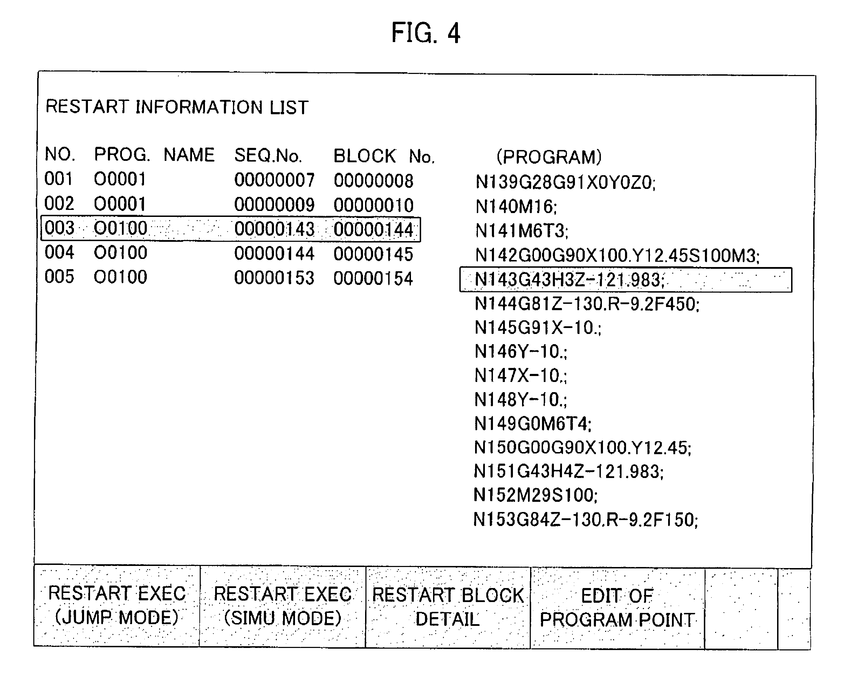

FIG. 4 illustrates the manner of how part of the program restart block data is displayed in list form according to the present invention. As shown in FIG. 4, the displayed list includes program names, sequence numbers, and block numbers showing the locations of the respective blocks as counted from the beginning of the program. By retrieving and analyzing the management information described above (in connection with claim 1), it is possible to display a list of program restart block data in order of acquisition/saving.

When one piece of program restart block data in the list is selected with the cursor, the corresponding program may be displayed in the right-hand section of the screen, by using the program pointer saved in the program restart block data.

As means for displaying a program, the program may be searched by the sequence number to locate the part of the program to be displayed, or the program counter may be used to locate the part of the program to be displayed, though the searching speed is lower than in the case of using the program pointer information. The list of the program restart block data as well as the part of the program specified by the program pointer information are displayed, and therefore, it is possible to quickly check the program blocks where the status of codes governing the operation of the numerical controller changes. Also, since the order of execution of the program blocks is displayed, the operator can confirm whether the program is running properly or not.

When the cursor is moved up or down in the displayed list, the right-hand section of the screen may be switched to display the corresponding program. Also, when the button "RESTART EXEC (JUMP MODE)" or "RESTART EXEC (SIMU. MODE)" at the bottom of the screen is pressed, restart of the program may be executed by using the currently selected program restart block data.

"RESTART EXEC (JUMP MODE)": When this button is pressed, the program is restarted in the jump mode.

"RESTART EXEC (SIMU. MODE)": On selection of this button, the program is restarted in the provisional execution mode.

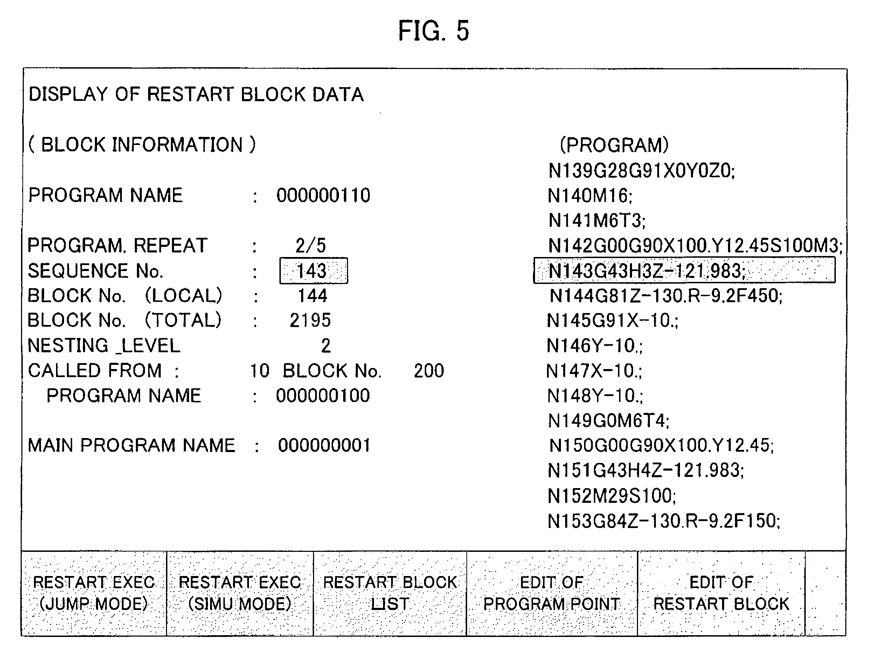

By pressing the button "RESTART BLOCK DETAIL", it is possible to display details of the currently selected program restart block data (cf. FIG. 5).

The cursor point shown in the right-hand program display section can be moved up or down by pressing the button "EDIT OF PROGRAM POINT". Where the button "RESTART EXEC (JUMP MODE)" or "RESTART EXEC (SIMU. MODE)" is depressed with the cursor moved to a certain point, the program is restarted from the moved point.

FIG. 5 illustrates an exemplary frame displayed when one piece of program restart block data is selected to show its details. Information on the program to be restarted can be displayed by using the program pointer information saved in the program restart block data.

By pressing the button "EDIT OF RESTART BLOCK" shown in FIG. 5, the operator can move up or down the cursor point on the detailed display (the shaded portion to the right of "SEQUENCE No."), thereby designating a different block as the restart point. Further, where the button "RESTART EXEC (JUMP MODE)" or "RESTART EXEC (SIMU. MODE)" at the bottom of the detailed display is pressed, the program is restarted by using the currently selected program restart block data of which the details are then displayed.

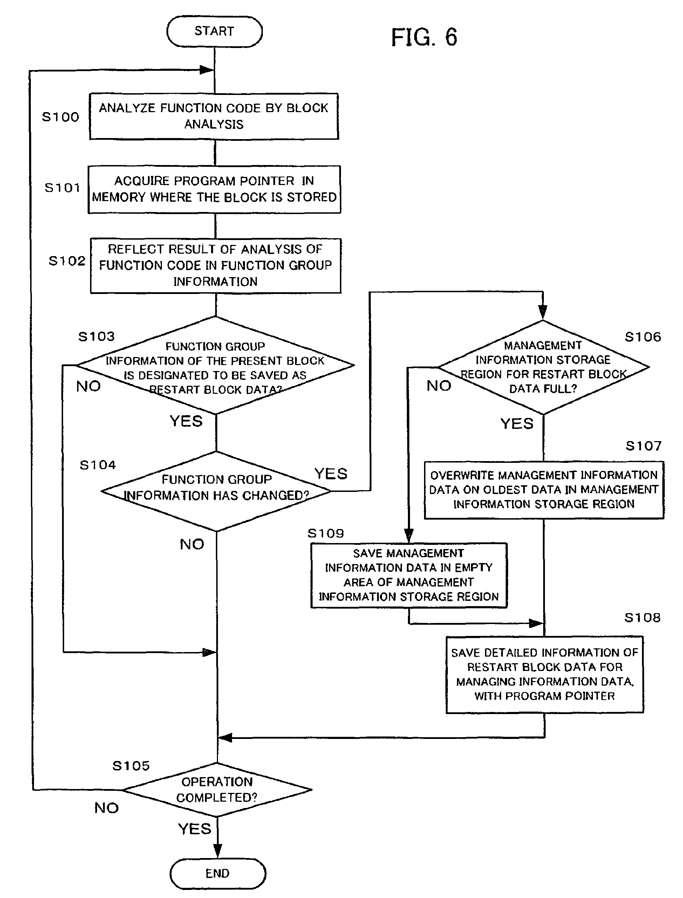

FIG. 6 is a flowchart illustrating an algorithm of procedure for acquiring and saving the program restart block data for restart of machining according to the present invention. In the following, the procedure will be explained with reference to the step numbers.

During normal program operation, each function code is analyzed by the block analysis process (Step S100), a program pointer indicating location in the memory where the block including the function code is stored is acquired (Step S101), and the result of the analysis of the function code is reflected in the function group information (Step S102). Then, the function group information of the present command block is searched to determine whether or not there exists function group information to be saved as restart block data (Step S 103). If such function group information exists, the procedure proceeds to Step S104; if no such function group information exists, the procedure proceeds to Step S105.

In Step S104, it is determined whether or not the command status has changed from the one indicated by the previous block in the function group information. If the command status is not changed, the procedure proceeds to Step S105 and it is determined whether or not the operation has completed. If the operation has completed, the procedure is terminated. On the other hand, if it is judged in Step S104 that the command status has changed from the one indicated by the function group information, the procedure proceeds to Step S106.

It is determined in Step S 106 whether the region for storing the management information of the program restart block data is fully occupied or not. If the management information storage region is full, the new management information is written over the oldest one stored in the management information storage region (Step S107), and detailed information of the program restart block data is acquired and saved in the fixed region associated with the corresponding management information (Step S108). At this time, the program pointer acquired beforehand is also saved (Step S108), whereupon the procedure proceeds to Step S105.

If it is judged in Step S 106 that the management information storage region is not fully occupied, the management information is acquired and saved in an empty area reserved for the management information (Step S 109), whereupon the procedure proceeds to Step S108.

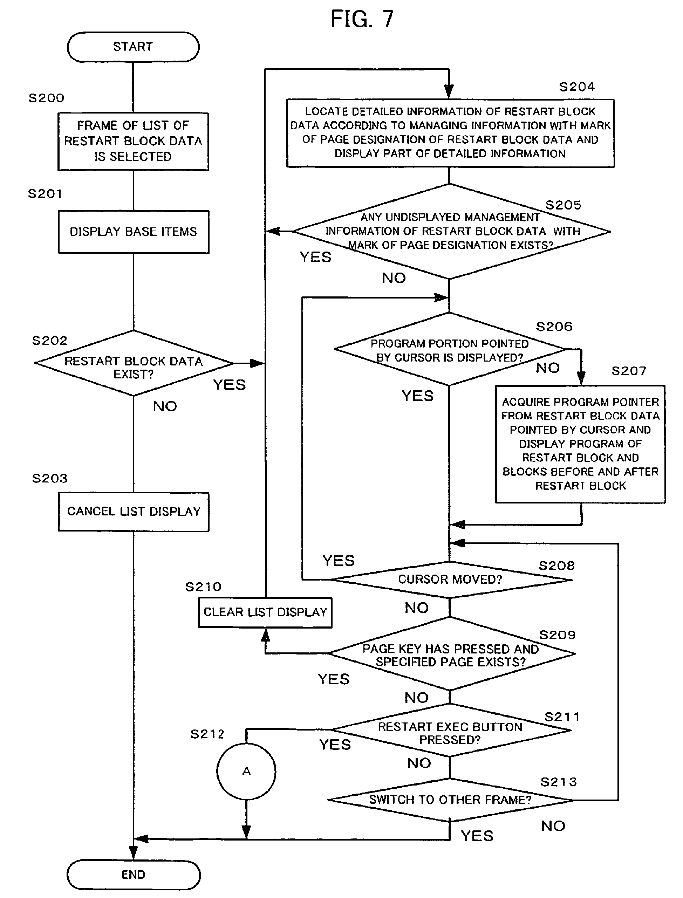

FIG. 7 is a flowchart illustrating an algorithm of procedure for displaying the program restart block data and restarting machining according to the present invention. The procedure will be explained below with reference to the step numbers. In the following, it is assumed that the management information of the program restart block data is already saved so as to be arranged in ascending order of saving time (alternatively, the management information may be arranged in descending order of saving time). Also, since a maximum number of pieces of data that can be shown in the list is limited, information is entered in advance which indicates whether the individual saved program restart block data is to be displayed on the first page or the second page.

A program restart block data list frame is selected (Step S200), and base items are displayed (Step S201). It is then determined whether or not there exists program restart block data (Step S202), and if there is no program restart block data, the procedure proceeds to Step S203, in which the list display is canceled, followed by termination of the procedure.

If it is judged in Step S202 that there is program restart block data, the detailed information of the program restart block data is located on the basis of the management information with a mark of page designation, and part of the detailed information is displayed (Step S204).

Then, it is determined whether or not there is any other management information with the mark of page designation that is not displayed yet (Step S205). If there exists management information that is not displayed yet, the procedure returns to Step S204, whereupon Steps S204 and S205 are executed again. If there is no management information to be displayed, the procedure proceeds to Step S206.

Subsequently, it is determined in Step S206 whether or not the program portion pointed by the cursor has been displayed. If the program is not displayed, the program pointer is acquired from the program restart block data for the program block in the list pointed by the cursor, and the restart block and several program blocks preceding and succeeding the restart block are displayed (Step S207), whereupon the procedure proceeds to Step S208.

If it is judged in Step S206 that the program has been displayed, it is determined whether or not the cursor has been moved (Step S208). If the cursor has been moved, the procedure returns to Step S206. If the cursor has not been moved, it is determined whether or not the page key has been pressed and also whether or not the specified page exists (Step S209). If the specified page exits, the list display is cleared (Step S210), and the procedure returns to Step S204.

If it is judged in Step S209 that the page key has been pressed but the specified page does not exist, it is determined whether or not the button "RESTART EXEC" has been pressed (Step S211). If it is judged that the button has been pressed, the procedure proceeds to Step S212. On the other hand, if it is judged that the button has not been pressed, the procedure proceeds to Step S213 to determine whether or not the frame has been switched to some other frame. If the frame is not switched, the procedure returns to Step S208, and if the frame has been switched to a different frame, the procedure ends.

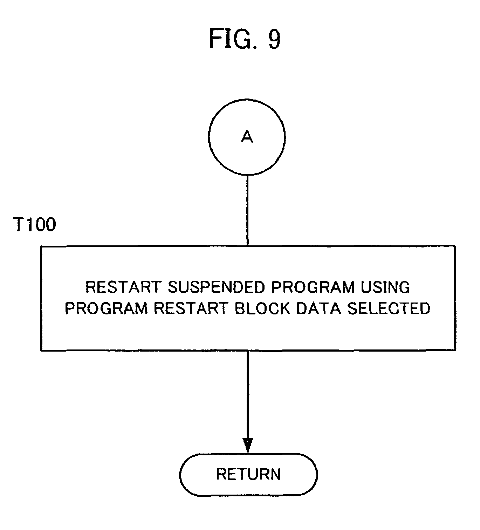

In Step S212, the suspended program is restarted using the currently selected program restart block data (T100), as shown in FIG. 9. Thus, after the program restart is executed, the procedure returns to the algorithm shown in FIG. 7 and is terminated.

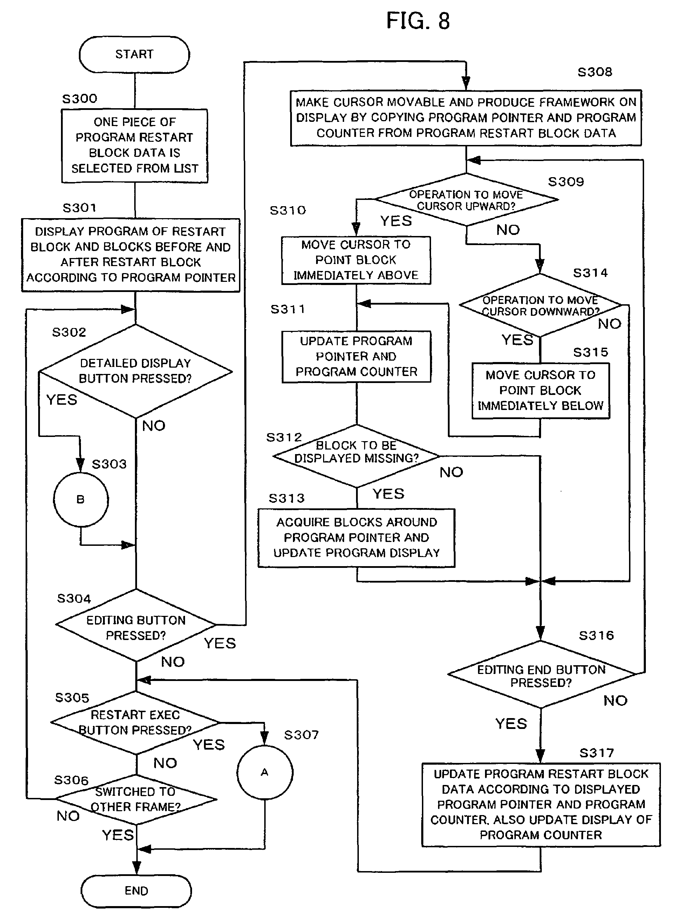

FIG. 8 is a flowchart illustrating an algorithm of procedure for resetting the restart point according to the present invention. In the following, the procedure will be explained with reference to the step numbers.

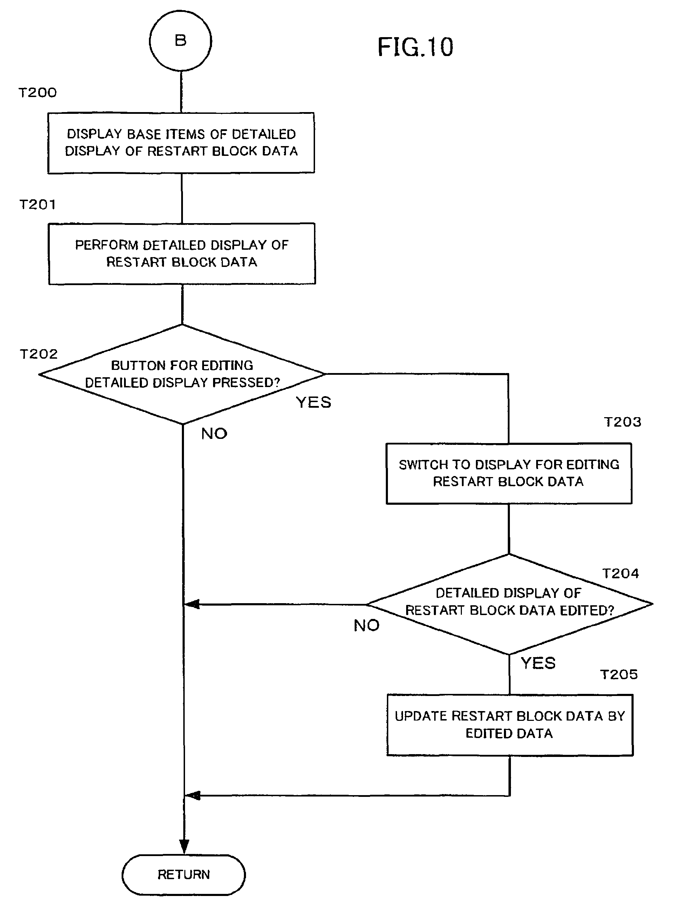

One piece of program restart block data is selected from among those displayed on the program restart block data list frame (Step S300), and then using the program pointer of the corresponding program restart block data, the restart block as well as program blocks preceding and succeeding the restart block are displayed (Step S3301). Subsequently, it is determined whether or not the button for displaying details of the program restart block data has been pressed (Step S302). If it is judged that the details display button has been pressed, the procedure proceeds to Step 5303, and if it is judged that the details display button is not pressed, the procedure proceeds to Step S304. Procedure in Step S303 will be described later with reference to the flowchart of FIG. 10 illustrating an algorithm of the procedure.

In Step S304, it is determined whether or not the button for editing the program display has been pressed, and if it is judged that the button has been pressed, the procedure proceeds to Step S308. If it is judged that the edit button is not pressed, it is determined whether or not the "RESTART EXEC" button has been pressed (Step S305). If it is judged that the "RESTART EXEC" button has been pressed, the procedure proceeds to Step S307, and after execution of Step S307, the procedure ends. On the other hand, if it is judged that the "RESTART EXEC" button is not pressed, a determination is made as to whether or not the frame has been switched to a different frame

(Step S306). If it is judged that the frame is not switched to a different frame, the procedure returns to Step S302, and if it is judged that the frame has been switched to a different frame, the procedure ends. In Step S307, the aforementioned procedure shown in FIG. 9 is executed.

In Step S308 executed after Step S304, movement of the cursor on the program display is enabled, and the program pointer and the program counter are copied from the program restart block data to create a framework on display. Then, it is determined whether or not an operation to move the cursor upward is performed (Step S309), and if the operation to move the cursor upward is performed, the program display cursor is moved to point to the block immediately above (Step S310), and the program pointer and the program counter on display are updated (Step S311).

Subsequently, it is determined whether or not a block to be displayed is missing (Step S312), and if it is judged that no block is missing, the procedure proceeds to Step S316. If it is judged that a block to be displayed is missing, blocks preceding and succeeding the program pointer on display are acquired and the program display is updated (Step S313), whereupon the procedure proceeds to Step S316.

If it is judged in Step S309 that the operation to move the cursor upward is not performed, determination is made as to whether or not an operation to move the cursor downward is performed (Step S314). If it is judged that the operation to move the cursor downward is not performed, the procedure proceeds to Step S316; if it is judged that the operation to move cursor downward is performed, the cursor on the program display is moved to point to the block immediately below (Step S315), whereupon the procedure proceeds to Step S311.

In Step S316, it is determined whether or not the button for ending the program editing has been pressed. If it is judged that the end button is not pressed, the procedure returns to Step S309; if it is judged that the end button has been pressed, the program pointer and program counter on display are reflected in the original program restart block data and also the display of the program counter is updated (Step S317), whereupon the procedure proceeds to Step S305.

The procedure in Step S303 will be now explained. FIG. 10 is a flowchart illustrating an algorithm for the procedure in Step 303. In the following, the procedure will be explained with reference to the step numbers. First, base items of the details display of the program restart block data are displayed (Step T200), and then details of the program restart block data are displayed (Step T201).

Subsequently, it is determined whether or not the button for editing the detailed display of the program restart block has been pressed (Step T202), and if it is judged that the editing button is not pressed, the procedure ends. If it is judged that the editing button has been pressed, the display is switched for editing the program restart block data (Step T203).

It is then determined whether or not the detailed display of the program restart block data has been edited (Step T204). If it is judged that no editing has been performed, the procedure returns to Step S304 in FIG. 8. On the other hand, if it is judged that editing has been made, the program restart block data is updated by the edited data (Step T205), whereupon the procedure returns to Step S304 in FIG. 8.

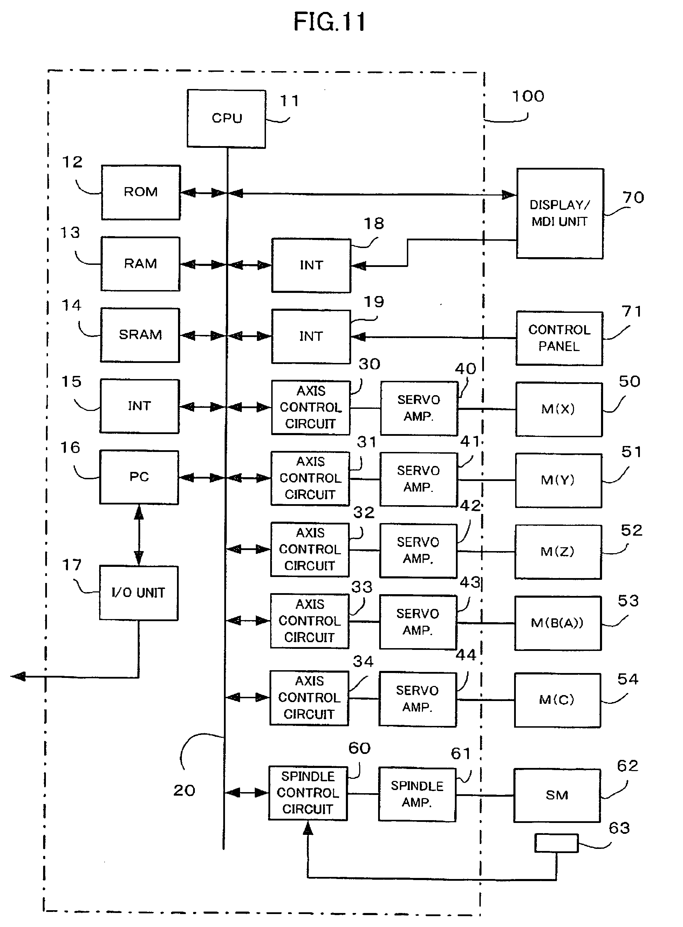

FIG. 11 is a block diagram showing a principal part of a computer numerical control (CNC) device 100 according to the embodiment of the present invention, which is adapted to control a five-axis machine. A CPU 11 is a processor for globally controlling the numerical controller 100. The CPU 11 loads, via a bus 20, system programs stored in a ROM 12 and controls the entire numerical controller in accordance with the system programs. Also, in the ROM 12 are stored in advance various other system programs for performing an editing process necessary for the creation and editing of machining programs, and a process for automatic operation. A RAM 13 temporarily stores computational data, display data, and various data input by the operator through a display/MDI unit 70.

An SRAM 14 is backed up by a battery, not shown, and serves as a nonvolatile memory capable of retaining the data stored therein even if the power supply to the numerical controller 100 is turned off. The SRAM 14 stores machining programs and the like read through an interface 15 or input through the display/MDI unit 70. Information designating the codes of which the status is to be stored among the codes governing the operation of the numerical controller 100 may be input to the SRAM 14 through input means (such as the MDI unit explained later) so that the SRAM 14 may be used as the designation means 5 shown in FIG. 1.

Machining programs containing command point sequence data and vector sequence data created using a CAD/CAM system or profile copying apparatus are input through the interface 15 and stored in the SRAM 14. The SRAM 14 also stores a program for the process of acquiring and saving the program restart block data for restart of machining, executed in the present invention.

A machining program edited in the numerical controller 100 may be output through the interface 15 to be stored in an external storage device. In accordance with a sequence program stored in the numerical controller 100, a PC (programmable controller) 16 outputs signals through an I/O unit 17 to auxiliary devices (e.g., actuators such as a robot hand for changing tools) of the machine tool, to control the auxiliary devices. Also, the PC receives signals from various switches and the like of a control panel mounted on the body of the machine tool, then processes the received signals as needed, and transfers the processed signals to the CPU 11.

The display/MDI unit 70 is a manual data input device equipped with a display, a keyboard, etc. Command data input from the keyboard of the display/MDI unit 70 is transferred via an interface 18 to the CPU 11. An interface 19 is connected to a control panel 71 provided with a manual pulse generator and the like.

Axis control circuits 30 to 34 associated with respective axes are supplied with move command values from the CPU 11 and output commands to respective servo amplifiers 40 to 44. On receiving the commands, the servo amplifiers 40 to 44 drive servomotors 50 to 54 associated with the respective axes. The servomotors 50 to 54 have position/velocity detectors respectively built therein and feed position/velocity feedback signals from the position/velocity detectors back to the respective axis control circuits 30 to 34 to carry out position/velocity feedback control.

The servomotors 50 to 54 respectively drive X, Y, Z, B (A) and C axes of the fixe-axis machine. A spindle control circuit 60 is supplied with a spindle rotation command and outputs a spindle velocity signal to a spindle amplifier 61. On receiving the spindle velocity signal, the spindle amplifier 61 causes a spindle motor 62 to rotate at the instructed rotational speed. A position coder 63 feeds pulses generated thereby in synchronism with the rotation of the spindle motor 62 back to the spindle control circuit 60 to perform velocity feedback control. In this manner, the operation of the fixe-axis machine is controlled by the numerical controller 100.

## Claims

1. A numerical controller (100) for controlling machining by executing a machining program, having a function of restarting suspended machining, said numerical controller comprising:
analyzing means (1, 2, 3, 4) that successively analyzes blocks of the machining program in execution;
designation means (5) for designating specific codes which command specific functions of the numerical controller among codes contained in blocks of the machining program in execution;
storing means (6) that stores status of the specific codes designated in advance by said designating means (5) in the analyzed block of the machining program in execution;
determining means (7) that determines whether or not status of each specific function is changed based on comparison of newly stored status and already stored status of the specific codes; and
data acquiring/saving means (8) that acquires and saves information about each block, of the machining program in execution, which is determined to contain a said specific code by which the status of a said specific function is changed, as program restart block data for restarting the suspended machining,
wherein the program restart block data acquired and saved by said data acquiring/saving means (8, 9) includes a program pointer indicative of a location in memory where the block of the machining program is stored, and **characterised in that**
the data acquiring/saving means (8) stores a predetermined number of items of program block restart data and, if the number of items of program restart block data exceeds the predetermined number, identifies the oldest item of program restart block data and writes over the oldest item with the newest item of program restart block data.

2. A numerical controller (100) according to claim 1, further comprising first display means that displays at least a part of the acquired and saved program restart block data in order of execution as a list on a display screen.

3. A numerical controller (100) according to claim 2, further comprising selection means for allowing an operator to select a piece of the program restart block data from the list displayed on the display screen, and restart execution means for restarting the suspended machining using the selected piece of the program restart block data.

4. A numerical controller (100) according to claim 3, further comprising second display means that displays a restart block of the machining program for restarting the suspended machining and blocks preceding and succeeding the restart block, based on information of the program pointer included in the selected piece of the program restart block data.

5. A numerical controller (100) according to claim 4, further comprising restart point designation means that allows an operator to designate a desired block as the restart block using a cursor movable on the blocks of the machining program displayed by said second display means, so that the machining program is restarted from the selected block.

## Patentansprüche

1. Numerische Steuerung (100) zum Steuern von Bearbeitung durch Ausführung eines Bearbeitungsprogramms, mit einer Funktion zum Neustart von ausgesetzter Bearbeitung, wobei die numerische Steuerung umfasst
Analysemittel (1, 2, 3, 4), welches nacheinander Blöcke des Bearbeitungsprogramms bei der Ausführung analysiert;
Bestimmungsmittel (5) zum Bestimmen von spezifischen Codes, die bestimmte Funktionen der numerischen Steuerung unter den in Blöcken des Bearbeitungsprogramms bei der Ausführung befindlichen Codes befehlen;
Ablagemittel (6), welches Zustände der spezifischen Codes ablegt, die im Voraus durch das Bestimmungsmittel (5) im analysierten Block des Bearbeitungsprogramms bei der Ausführung bestimmt wurden;
Erfassungsmittel (7), welches erfasst, ob ein Zustand jeder spezifischen Funktion sich geändert hat oder nicht, auf der Basis eines Vergleichs von einem neu abgelegtem Zustand und einem bereits abgelegten Zustand der spezifischen Codes; und
Datenaufnahme-/-speichermittel (8), welches Information über jeden Block des Bearbeitungsprogramms bei der Ausführung aufnimmt und speichert, von welchem bestimmt wurde, dass er einen spezifischen Code enthält, durch welchen der Zustand einer genannten spezifischen Funktion geändert ist, als Programmneustartblockdaten für den Neustart der ausgesetzten Bearbeitung,
wobei die vom Datenaufnahme-/-speichermittel (8, 9) aufgenommenen und gespeicherten Programmneustartblockdaten enthalten eine Programmanweisung, die einen Ort in einem Speicher anzeigt, wo der Block des Bearbeitungsprogramms abgelegt ist, und **dadurch gekennzeichnet, dass**
das Datenaufnahme-/-speichermittel (8) eine vorbestimmte Anzahl Gegenstände von Programmneustartblockdaten ablegt und, übersteigt die Anzahl Gegenstände von Programmneustartblockdaten eine vorbestimmte Anzahl, die den ältesten Gegenstand von Programmneustartblockdaten identifiziert und den ältesten Gegenstand mit dem neuesten Gegenstand von Programmneustartblockdaten überschreibt.

2. Numerische Steuerung (100) gemäß Anspruch 1, zudem umfassend ein erstes Anzeigemittel, welches mindestens einen Teil der aufgenommenen und gespeicherten Programmneustartblockdaten in der Reihenfolge der Ausführung als Liste auf einem Anzeigeschirm anzeigt.

3. Numerische Steuerung (100) gemäß Anspruch 2, zudem umfassend Auswahlmittel zum Ermöglichen, dass ein Nutzer einen Teil der Programmneustartblockdaten aus der auf dem Anzeigeschirm angezeigten Liste auswählt, und Neustartausführungsmittel für den Neustart der ausgesetzten Bearbeitung durch Verwendung des ausgewählten Teils der Programmneustartblockdaten.

4. Numerische Steuerung (100) gemäß Anspruch 3, zudem umfassend ein zweites Anzeigemittel, das einen Neustartblock des Bearbeitungsprogramms anzeigt zum Neustarten der ausgesetzten Bearbeitung und Blöcke, die dem Neustartblock vorangehen und nachfolgen, auf der Basis von Information der im ausgewählten Teil der Programmneustartblockdaten enthaltenen Programmanweisung.

5. Numerische Steuerung (100) gemäß Anspruch 4, zudem umfassend Neustartpunktbestimmungsmittel, das ermöglicht, dass ein Benutzer einen gewünschten Block als den Neustartblock angibt durch Verwendung eines über den Blöcken des Bearbeitungsprogramms beweglichen Pfeils, der durch ein zweites Anzeigemittel angezeigt wird, so dass das Bearbeitungsprogramm vom ausgewählten Block neu gestartet wird.

## Revendications

1. Un dispositif de commande numérique (100) pour la commande d'un usinage par l'exécution d'un programme d'usinage possédant une fonction de redémarrage d'un usinage interrompu, ledit dispositif de commande numérique comprenant :
un moyen d'analyse (1, 2, 3, 4) qui analyse successivement des blocs du programme d'usinage en cours d'exécution,
un moyen de désignation (5) pour la désignation de codes spécifiques qui commandent des fonctions spécifiques du dispositif de commande numérique parmi des codes contenus dans des blocs du programme d'usinage en cours d'exécution,
un moyen de conservation en mémoire (6) qui conserve en mémoire un état des codes spécifiques désignés à l'avance par ledit moyen de désignation (5) dans le bloc analysé du programme d'usinage en cours d'exécution,
un moyen de la détermination (7) qui détermine si ou non un état de chaque fonction spécifique a changé en fonction d'une comparaison d'un état nouvellement conservé en mémoire et d'un état déjà conservé en mémoire des codes spécifiques, et
un moyen d'acquisition/sauvegarde de données (8) qui acquiert et sauvegarde des informations concernant chaque bloc du programme d'usinage en cours d'exécution qui est déterminé contenir ledit code spécifique par lequel l'état de ladite fonction spécifique a changé sous la forme de données de bloc de redémarrage de programme pour le redémarrage de l'usinage interrompu,
où les données de bloc de redémarrage de programme acquises et sauvegardées par ledit moyen d'acquisition/sauvegarde de données (8, 9) comprennent un pointeur de programme indicatif d'un emplacement dans une mémoire dans lequel le bloc du programme d'usinage est conservé, et **caractérisé en ce que**
le moyen d'acquisition/sauvegarde de données (8) conserve en mémoire un nombre prédéterminé d'éléments de données de bloc de redémarrage de programme et, si le nombre d'éléments de données de bloc de redémarrage de programme dépasse le nombre prédéterminé, identifie l'élément le plus ancien de données de bloc de redémarrage de programme et remplace l'élément le plus ancien par l'élément le plus récent de données de bloc de redémarrage de programme.

2. Un dispositif de commande numérique (100) selon la revendication 1, comprenant en outre un premier moyen d'affichage qui affiche au moins une partie des données de bloc de redémarrage de programme acquises et sauvegardées dans l'ordre d'exécution sous la forme d'une liste sur un écran d'affichage.

3. Un dispositif de commande numérique (100) selon la revendication 2, comprenant en outre un moyen de sélection destiné à permettre à un opérateur de sélectionner une portion des données de bloc de redémarrage de programme à partir de la liste affichée sur l'écran d'affichage, et un moyen d'exécution de redémarrage pour le redémarrage de l'usinage interrompu au moyen de la portion sélectionnée des données de bloc de redémarrage de programme.

4. Un dispositif de commande numérique (100) selon la revendication 3, comprenant en outre un deuxième moyen d'affichage qui affiche un bloc de redémarrage du programme d'usinage pour le redémarrage de l'usinage interrompu et des blocs qui précèdent et suivent le bloc de redémarrage, en fonction d'informations du pointeur de programme incluses dans la portion sélectionnée des données de bloc de redémarrage de programme.

5. Un dispositif de commande numérique (100) selon la revendication 4, comprenant en outre un moyen de désignation de point de redémarrage qui permet à un opérateur de désigner un bloc souhaité en tant que bloc de redémarrage au moyen d'un curseur déplaçable sur les blocs du programme d'usinage affichés par ledit deuxième moyen d'affichage, de sorte que le programme d'usinage soit redémarré à partir du bloc sélectionné.
